# EUROPEAN PATENT APPLICATION

(11) **EP 2 720 250 A2**
(43) Date of publication of application: **16.04.2014**
(21) Application number: 13188025.4
(22) Date of filing: 10.10.2013
(51) Int. Cl.: H01J 43/24

(54) **MCP unit, MCP detector, and time-of-flight mass spectrometer**

(30) Priority: 10.10.2012 JP 2012225163
(71) Applicant: HAMAMATSU PHOTONICS K.K., Hamamatsu-shi Shizuoka 435-8558 (JP)
(72) Inventor: Suzuki, Akio, Hamamatsu-shi, Shizuoka 435-8558 (JP); Washiyama, Yuuya, Hamamatsu-shi, Shizuoka 435-8558 (JP)
(74) Representative: Grünecker, Kinkeldey, Stockmair & Schwanhäusser

(57) **Abstract**

An MCP unit of the present invention has a triode structure with a structure to achieve a desired time response characteristic independent of restrictions from a channel diameter of MCP, and is provided with an MCP group, a first electrode, a second electrode, an anode, and an acceleration electrode. Particularly, the MCP unit further comprises an electron lens structure for confining reflected electrons emitted from the anode in response to incidence of secondary electrons from the MCP group, within a space between the acceleration electrode and the anode.

## Description

### BACKGROUND OF THE INVENTION

### Field of the Invention

The present invention relates to an MCP unit having a function to multiply charged particles such as electrons or ions, as a major part of a detector used in time-of-flight mass spectrometry or the like, an MCP detector including the MCP unit, and a time-of-flight mass spectrometer including the MCP detector.

### Related Background Art

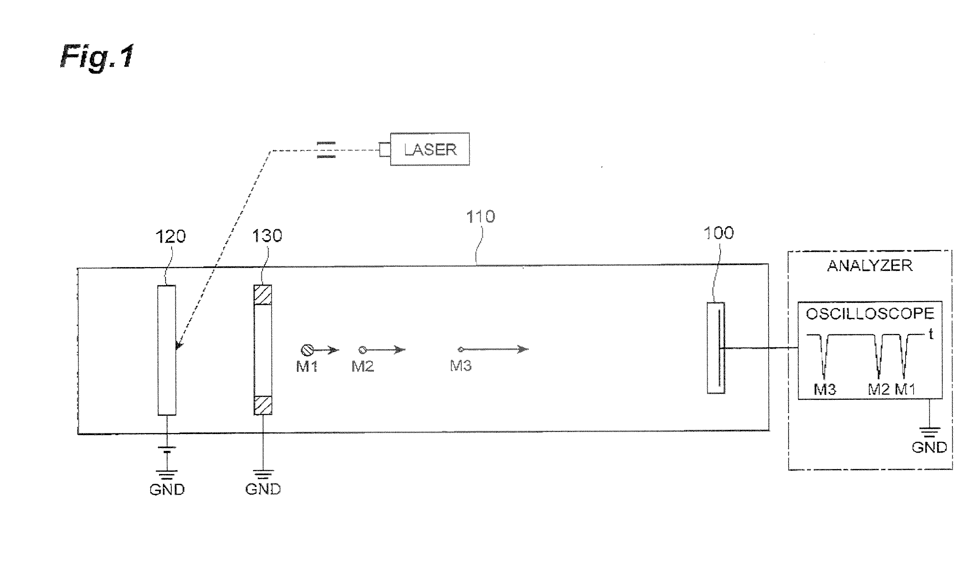

The Time-Of-Flight Mass Spectrometry (TOF-MS) is known as a technique for detecting molecular weights of polymers, Fig. 1 is a drawing for explaining a structure of an analyzer based on this TOF-MS (which will be referred to hereinafter as TOF-MS device).

In the TOF-MS device, as shown in Fig. 1, a detector 100 is arranged at one end in a vacuum vessel 110 while a sample (ion source) 120 is arranged at the other end in the vacuum vessel 110. A ring-shaped electrode 130 (ion accelerator) having an opening is arranged between them. The electrode 130 is grounded and, when the sample 120 to which a predetermined voltage is applied is irradiated with a laser beam from an ion extraction system (including a laser source), ions emitted from the sample 120 are accelerated by an electric field formed between the sample 120 and the electrode 130, to hit the detector 100. An acceleration energy given to the ions between the sample 120 and the electrode 130 is determined by an ionic charge. For this reason, with the same ionic charge, velocities of ions passing the electrode 130 are dependent on masses of the respective ions. Since an ion flies at a constant velocity between the electrode 130 and detector 100, a time of flight of the ion between the electrode 130 and the detector 100 is inversely proportional to its velocity. Namely, an analysis unit obtains this time of flight from the electrode 130 to the detector 100 to determine the mass of the ion (or it monitors the output voltage from the detector 100 on an oscilloscope). In a visual sense, the mass of the ion can be determined from an occurrence time of a peak appearing in a time spectrum of the output voltage displayed on the oscilloscope.

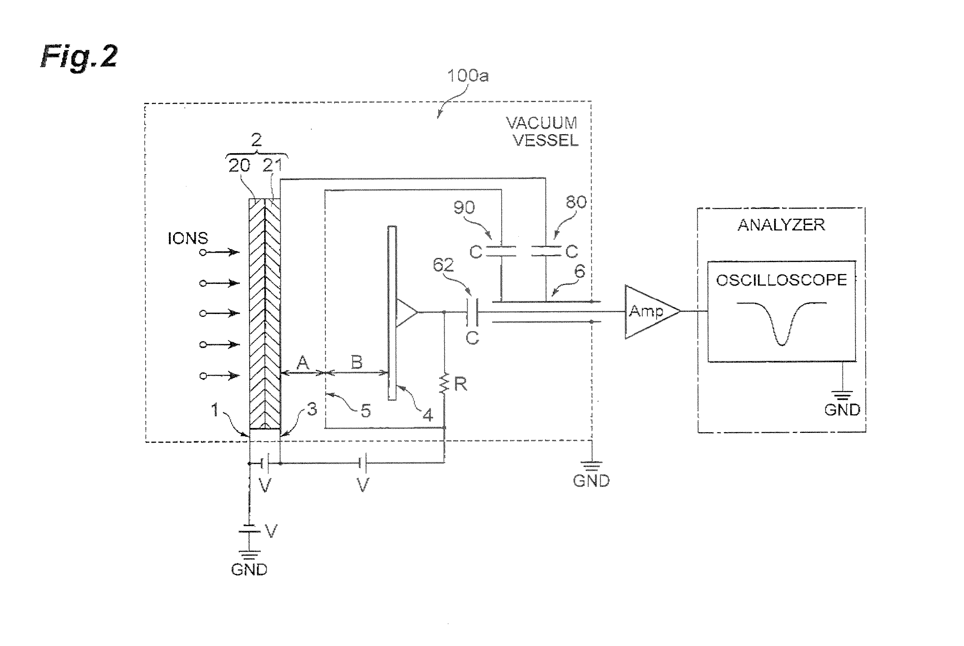

A known detector applicable to this TOF-MS device is, for example, the MCP detector disclosed in Patent Literature 1. Fig. 2 is an equivalent circuit diagram of the MCP detector with the triode structure disclosed in Patent Literature 1, as an example of the MCP detector applicable to the TOF-MS device. The MCP detector 100a shown in Fig. 2 is housed in a vacuum vessel the interior of which is maintained at a predetermined degree of vacuum. The vacuum vessel is comprised of an electroconductive material (metal housing) and is set at the ground potential. In the MCP detector 100a, two microchannel plates (MCPs) 20, 21 (which will be referred to hereinafter as MCP group 2) are interposed between IN electrode 1 and OUT electrode 3 in each of which an opening is formed in a center. An anode 4 is located behind the OUT electrode 3 and an acceleration electrode 5 having a metal mesh is further located between the OUT electrode 3 and the anode 4. The vacuum vessel is connected to the shield side of BNC terminal (Bayonet Neil-Concelman connector) 6 for signal readout, while a core wire of the BNC terminal 6 is connected through a capacitor 62 to the anode 4. This capacitor 62 has a function to insulate the output so as to keep a single output level at the GND level. Furthermore, there are also capacitors 80, 90 arranged between the shield side of the BNC terminal 6 and the OUT electrode 3 and between the shield side of the BNC terminal 6 and the acceleration electrode 5, respectively. The distance B between the acceleration electrode 5 and the anode 4 is set to be larger than the distance A between the MCP group 2 and the acceleration electrode 5.

In the MCP detector 100a having the structure as described above, the OUT electrode 3 is set at a minus potential higher than the IN electrode 1, with respect to a minus potential set for the IN electrode 1. The acceleration electrode 5 and anode 4 are set at respective minus potentials higher than the OUT electrode 3. The acceleration electrode 5 and anode 4 may be set at the same potential. In this manner, the MCP detector 100a has a floating anode structure in which the anode is not grounded.

A signal from the anode 4, which is extracted through the core wire of the BNC terminal 6, is amplified by an amplifier (Amp) and then taken into the analysis unit. Specifically, in the MCP detector 100a, when charged particles are injected into the MCP group 2, the MCP group 2 emits a large number of electrons (secondary electrons multiplied in each of the MCPs) in accordance therewith. The secondary electrons emitted in this manner impinge on the anode 4 to be converted into an electric signal as a voltage or current change (the signal is output from the core wire of the BNC terminal 6). On this occasion, the detection signal is output at the ground potential to the outside by the capacitor 62 disposed between the anode 4 and the core wire and generation of waveform distortion and overshoot (ringing) of the output signal is suppressed by the capacitors 80, 90 disposed between the shield side of the BNC terminal 6 and the OUT electrode 3 and between the shield side of the BNC terminal 6 and the acceleration electrode 5, respectively.

### CITATIONLIST

### Patent Literature

Patent Literature 1: U.S. Pat. No. 7,564,043

### SUMMARY OF THE INVENTION

### Technical Problem

In recent years, TOF-MS has been required to be further improved in characteristics of the detector, based on characteristic improvement in the region from the ion source to the detector resulting from development of ionization techniques and ion optics and characteristic improvement of an analysis system resulting from development of electronics. As an electronic device meeting such requirements, the MCP detector of the triode structure disclosed in the aforementioned Patent Literature 1 allows optional control of a rise time and a fall time of a detection peak in a time spectrum, in order to realize a desired time response characteristic independent of restrictions from the channel diameter of MCP. It was, however, found by Inventors' research that even with the MCP detector of the triode structure having such an excellent detection characteristic, stability of the detection characteristic could be degraded depending upon its operating environment.

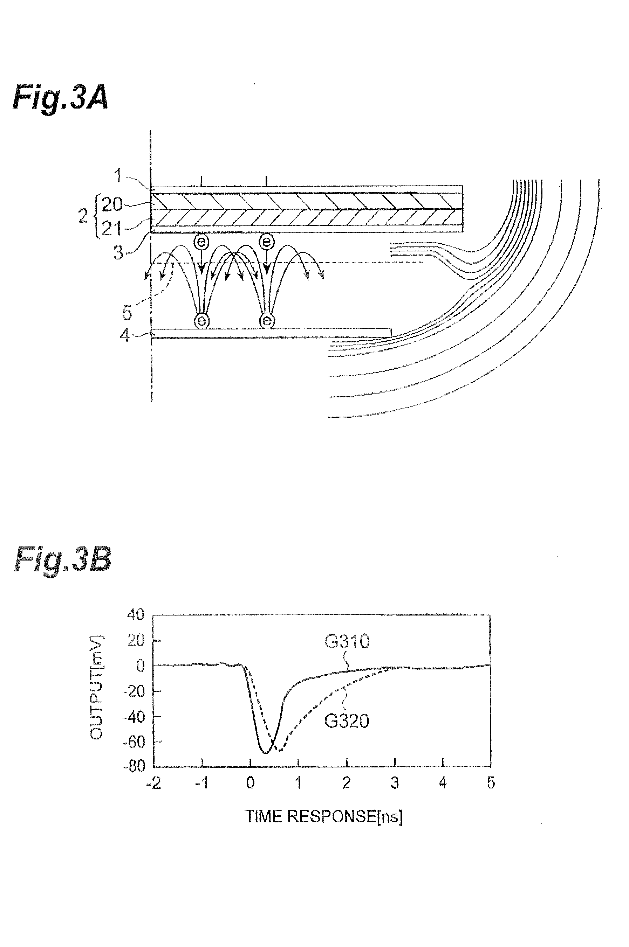

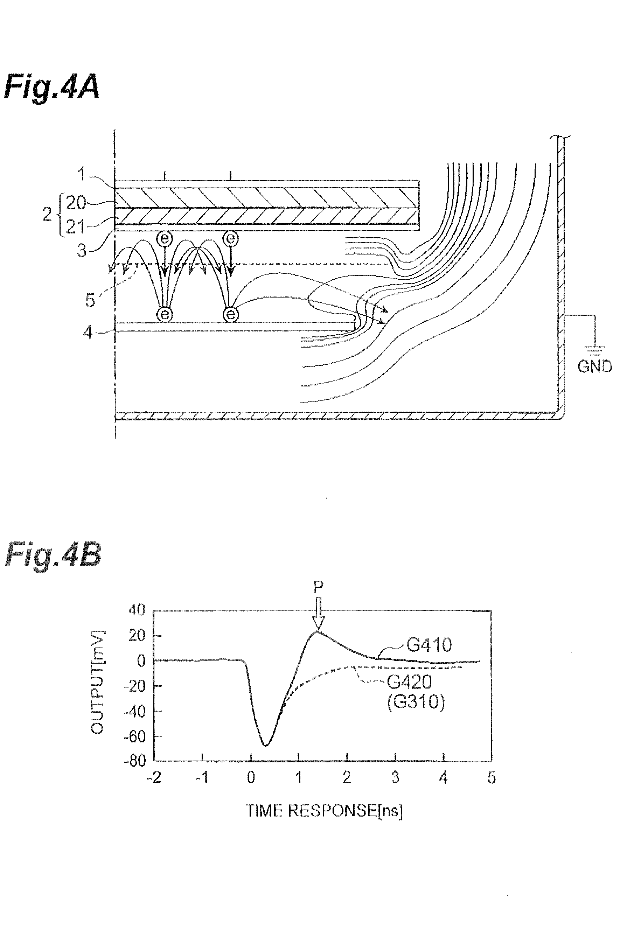

Namely, evaluation of the time response characteristic of the MCP detector of the triode structure is carried out under an environment less affected by an external potential source such as the vacuum vessel housing the MCP detector, as shown in Fig. 3A. Under such an environment less affected by the external potential source (Fig. 3A), we can obtain the signal waveform of the anode output (voltage signal) as shown in Fig. 3B. On the other hand, practically, the MCP detector with the anode 4 set at the minus potential is used under an environment in which it is housed in a metal housing set at the ground potential, as shown in Fig. 4A. Particularly, in use of the MCP detector, where the MCP detector is used as sufficiently separated from the inner wall of the housing, a stable time response characteristic is obtained, but it is the present status that it is difficult to ensure a sufficient distance between the MCP detector and the housing inner wall, because of the recent demand for downsizing of the device. Therefore, the signal waveform of the anode output as shown in Fig. 4B is obtained under the environment in which the metal housing as external potential source set at the ground potential is located near the MCP detector (Fig. 4A).

Equipotential lines shown in each of Fig. 3A and Fig. 4A indicate those in a situation in which the acceleration electrode 5 and anode 4 are set at the same potential. In Fig. 3B showing the measurement result under the environment less affected by the external potential source, graph G310 indicates the anode output obtained from the MCP detector having the triode structure, and graph G320 the anode output obtained from the MCP detector having the bipolar structure without the acceleration electrode between the MCP group 2 and the anode 4. In Fig. 4B showing the measurement result under the environment easily affected by the external potential source, graph G410 indicates the anode output obtained from the MCP detector having the triode structure, and graph G420 the anode output obtained from the MCP detector having the triode structure under the environment less affected by the external potential source (which is the same as graph G310 in Fig. 3B), as a reference example.

As seen from a comparison between graph G310 in Fig. 3B and graph G410 in Fig. 4B, there is an overshoot (ringing) generated at a portion indicated by arrow P in graph G410, i.e., at a part after a minus peak under the environment of Fig. 4A. The overshoot refers to a phenomenon in which the voltage signal from the anode 4 temporarily rises to the plus after the minus peak.

To inspect a mechanism of generation of the overshoot, a comparison is made between an electric field distribution under the environment of Fig. 3A and an electric field distribution under the environment of Fig. 4A. It is then understood that under the environment of Fig. 3A there is little disturbance of the electric field around the MCP detector and the set potentials are stable in the MCP detector. It is conceived that with the electric field being stable between the MCP group 2 and the anode 4 and, particularly, between the acceleration electrode 5 and the anode 4, even if electrons emitted from the MCP group 2 hit the anode 4 to generate reflected electrons (mainly including secondary electrons elastically scattered by the anode 4 and secondary electrons newly generated by electron bombardment), the reflected electrons thus generated travel in uniform motion to be absorbed by the anode 4 and the acceleration electrode 5 and therefore the resultant signal waveform is the one of the anode output like graph G310 shown in Fig. 3B. It is seen on the other hand that under the environment of Fig. 4A, since the housing inner wall set at the ground potential is located in close proximity to the anode 4 set at the minus potential, the electric field is disturbed around the MCP detector and equipotential lines penetrate into the space between the acceleration electrode 5 and the anode 4. It is considered that this situation increases the probability that the reflected electrons emitted from the anode 4 reach the inner wall of the housing in a short time without being absorbed by the anode 4 and it can be a factor to generate the overshoot. Namely, one of conceivable factors to generate the overshoot is that when the secondary electrons emitted from the MCP group 2 hit the anode 4, the reflected electrons emitted from the anode 4 jump out toward the inner wall of the housing, resulting in temporary shortage of electrons in the anode 4.

The present invention has been accomplished in order to solve the problem as described above and it is an object of the present invention to provide an MCP unit with a structure for obtaining a stable time response characteristic without being affected by an external environment, an MCP detector including the MCP unit, and a time-of-flight mass spectrometer including the MCP detector.

### Solution to Problem

An MCP unit according to the present invention is an MCP unit allowing optional control of a rise time and a fall time of a detection peak in a time spectrum, in order to realize a desired time response characteristic independent of the restrictions from the channel diameter of MCP, which comprises an MCP, a first electrode, a second electrode, an anode, and an acceleration electrode. Particularly, the MCP unit according to the present invention further comprises a restriction structure for confining reflected electrons (secondary electrons) emitted from the anode in response to incidence of the secondary electrons from the MCP, within a space between the acceleration electrode and the anode. The MCP is arranged on a plane intersecting with a central axis of the MCP unit and configured to emit secondary electrons internally multiplied in response to incidence of a charged particle traveling along the central axis. The MCP has an entrance face which the charged particle enters, and an exit face which is opposed to the entrance face and which the secondary electrons exit. The first electrode is an electrode in contact with the entrance face of the MCP, and is set at a first potential. The second electrode is an electrode in contact with the exit face of the MCP and is set at a second potential higher than the first potential. The anode is an electrode arranged at a position where the secondary electrons emitted from the exit face of the MCP arrive. This anode is arranged as intersecting with the central axis, and is set at a third potential higher than the second potential. The acceleration electrode is an electrode arranged between the MCP and the anode, and is set at a fourth potential higher than the second potential. The acceleration electrode has a plurality of openings for allowing the secondary electrons traveling from the exit face of the MCP to the anode to pass therethrough.

The restriction structure can be implemented by any of the following modes; the first mode of physically separating the space between the acceleration electrode and the anode from the surrounding space around the MCP unit; the second mode of restricting movement along directions perpendicular to the central axis of the MCP unit, of the reflected electrons emitted from the anode; the third mode of controlling a potential difference between the acceleration electrode and the anode; the fourth mode of controlling trajectories of the secondary electrons traveling from the microchannel plate to the anode; the fifth mode of changing a structure for suppressing emission itself of the reflected electrons from the anode, The foregoing restriction structure can be implemented by a combination of two or more of the first to fifth modes.

The restriction structure according to the first mode includes a ring member arranged between the acceleration electrode and the anode. This ring member has a through hole defined by a continuous surface surrounding the central axis of the MCP unit so as to allow the secondary electrons traveling from the acceleration electrode to the anode to pass therethrough. The ring member has a first face in contact with the acceleration electrode and a second face in contact with the anode, the second face being opposed to the first face, and the through hole of the ring member has a shape extending so as to connect the first face and the second face.

The anode can be realized by adopting one of various structures including a structure comprised of only a metal plate. For example, the anode may comprise an anode substrate (insulating substrate) comprised of an insulating material such as glass epoxy resin. In this case, the anode can be constructed by adopting a structure comprised of an insulating substrate, and a metal film (foil) provided over a partial region or over an entire surface on the insulating substrate. The anode may be one obtained by adopting a structure comprised of an insulating substrate, and a metal plate fixed to a partial region or to an entire surface on the insulating substrate, When the anode has the structure comprising the insulating substrate, a material of the ring member may be either of a metal material and an insulating material. However, in the structure in which the entire anode is comprised of the metal plate, the ring member exhibits different functions depending upon constituent materials thereof. For example, when the acceleration electrode and the anode are set at the same potential, the ring member is preferably comprised of the metal material. On the other hand, when the potential of the acceleration electrode and the potential of the anode are independently controlled, the ring member is preferably comprised of the insulating material,

An example of the restriction structure according to the second mode may include a mask member that covers a part of an effective area of the microchannel plate, which contributes to multiplication of the secondary electrons emitted in response to incidence of the charged particle, from the first electrode side. In this case, the mask member preferably has a through hole defined by a continuous surface surrounding the central axis of the MCP unit. Furthermore, the mask member may be a part of the first electrode.

Another example of the restriction structure according to the second mode may include the anode whose maximum diameter is set to be larger than a theoretical maximum diameter of the anode calculated under an ideal environment in which an electric field distribution around the MCP unit is less affected by an external potential source, the theoretical maximum diameter permitting absorption of the reflected electrons emitted once. In this case, a maximum diameter of the acceleration electrode is also preferably substantially coincident with the maximum diameter of the anode.

Another example of the restriction structure according to the second mode may include both of the acceleration electrode and the anode arranged in a state in which a first distance along the central axis from the second electrode to the acceleration electrode is smaller than a second distance along the central axis from the acceleration electrode to the anode and in such a manner that the second distance is not more than twice the first distance.

Still another example of the restriction structure according to the second mode may include a structure to weaken a potential gradient from the MCP unit to a housing by setting a sufficient separation distance from the MCP unit to the housing set at the ground potential.

The restriction structure according to the third mode may include the anode the third potential of which is set higher than the fourth potential of the acceleration electrode so that a potential gradient in a space between the acceleration electrode and the anode is smaller than a potential gradient in a space between the second electrode and the acceleration electrode.

An example of the restriction structure according to the fourth mode may include the first electrode having a side wall portion extending from an edge of a flat portion facing the entrance face of the microchannel plate toward the anode, as an electron lens structure for controlling trajectories of the secondary electrons traveling from the microchannel plate to the anode.

Another example of the restriction structure according to the fourth mode may include the second electrode having a side wall portion extending from an edge of a flat portion facing the exit face of the microchannel plate toward the anode.

The restriction structure according to the fifth mode may include the anode a surface of which is coated with carbon or the like to suppress generation of secondary electrons.

An MCP detector according to the present invention can be realized by the MCP unit having the structure as described above (the MOP unit according to the present invention). Namely, the MCP detector comprises the aforementioned MCP unit, and a signal output portion arranged so as to interpose the anode between the signal output portion and the microchannel plate. The signal output portion has a signal line electrically connected to the anode. The signal output portion may include a coaxial cable comprising the signal line and a shield portion surrounding the signal line, and in this case, the MCP detector preferably further comprises a capacitor having one terminal electrically connected to the shield portion, and the other terminal electrically connected to the acceleration electrode.

Furthermore, a time-of-flight mass spectrometer according to the present invention comprises: a vacuum vessel (metal housing set at the ground potential); an ion extraction system; an ion accelerator; the MCP detector having the structure as described above (the MCP detector according to the present invention); and an analysis unit for determining at least a mass, as information about an ion emitted from a sample. The vacuum vessel is one inside which a sample to be analyzed as an ion source is installed. The ion extraction system makes the sample in the vacuum vessel emit an ion, The ion accelerator is one for accelerating the ion emitted from the sample, which is arranged in the vacuum vessel. The MCP detector is arranged so as to interpose the ion accelerator between the MCP detector and the sample. The analysis unit detects a time of flight from the ion accelerator to the MCP detector, based on a detection signal from the MCP detector, thereby to determine the mass of the ion reaching the MCP detector.

Each of embodiments according to this invention will become more fully understood from the detailed description given hereinbelow and the accompanying drawings. These embodiments are given by way of illustration only, and thus are not to be considered as limiting the present invention.

Further scope of applicability of this invention will become apparent from the detailed description given hereinafter. However, it should be understood that the detailed description and specific examples, while indicating preferred embodiments of the invention, are given by way of illustration only, and that various modifications and improvements within the spirit and scope of the invention will become apparent to those skilled in the art from this detailed description.

### BRIEF DESCRIPTION OF THE DRAWINGS

Fig. 1 is a drawing showing a schematic structure of a TOF-MS device.

Fig. 2 is an equivalent circuit diagram showing an example of an MCP detector applied to the TOF-MS device.

Figs. 3A and 3B are drawings showing an electric field distribution near the MCP detector under an environment less affected by an external potential source, and a time response characteristic of the MCP detector.

Figs. 4A and 4B are drawings showing an electric field distribution near the MCP detector under an environment easily affected by the external potential source, and a time response characteristic of the MCP detector.

Fig. 5 is an assembly process diagram for explaining a structure of an MCP detector to which an MCP unit having the triode structure is applied (basic structure of the MCP unit and others according to the present invention).

Fig. 6 is a drawing showing a cross-sectional structure along the line L1-L1, of the MCP detector shown in Fig. 5.

Fig. 7 is a graph showing time response characteristics of the MCP detector to which the MCP unit having the triode structure is applied.

Fig. 8A is a cross-sectional view showing a structure of the MCP unit prepared for measurement of the response characteristics of Fig. 7, and Fig. 8B a table showing the measurement results.

Figs. 9A to 9C are drawings for explaining a structure of an acceleration electrode.

Figs. 10A and 10B are a graph showing a relation of aperture ratio (%) of the acceleration electrode applied to the MCP unit shown in Fig. 8A, against rise time (ps), and a table showing measurement conditions.

Fig. 11 is an equivalent circuit diagram for explaining characteristic structures of the MCP detector to which the MCP unit according to the present invention is applied.

Fig. 12 is an assembly process diagram for explaining a structure of the MCP detector to which the MCP unit according to the first embodiment is applied.

Fig. 13 is a drawing showing a cross-sectional structure along the line L2-L2, of the MCP detector shown in Fig. 12.

Fig. 14 is an assembly process diagram for explaining a first structure of the MCP detector to which the MCP unit according to the second embodiment is applied.

Fig. 15 is a drawing showing a cross-sectional structure along the line L3-L3, of the MCP detector shown in Fig. 14.

Fig. 16 is an assembly process diagram for explaining a second structure of the MCP detector to which the MCP unit according to the second embodiment is applied.

Fig. 17 is a drawing showing a cross-sectional structure along the line L4-L4, of the MCP detector shown in Fig. 16.

Fig. 18 is an assembly process diagram for explaining a third structure of the MCP detector to which the MCP unit according to the second embodiment is applied.

Fig. 19 is a drawing showing a cross-sectional structure along the line L5-L5, of the MCP detector shown in Fig. 18.

Fig. 20 is an equivalent circuit diagram for explaining a structure of the MCP detector to which the MCP unit according to the third embodiment is applied.

Figs. 21A and 21B are drawings showing a voltage applied state between an OUT electrode and an anode, in the MCP detector to which the MCP unit according to the third embodiment is applied, and a cross-sectional structure thereof.

Fig. 22 is an assembly process diagram for explaining a first structure of the MCP detector to which the MCP unit according to the fourth embodiment is applied.

Fig. 23 is a drawing showing a cross-sectional structure along the line L6-L6, of the MCP detector shown in Fig. 22.

Fig. 24 is an assembly process diagram for explaining a second structure of the MCP detector to which the MCP unit according to the fourth embodiment is applied.

Fig. 25 is a drawing showing a cross-sectional structure along the line L7-L7, of the MCP detector shown in Fig. 24.

### DESCRIPTION OF EMBODIMENTS

Each of embodiments of the MCP unit, MCP detector, and time-of-flight mass spectrometer according to the present invention will be described below in detail with reference to the accompanying drawings. In the description of the drawings, the same elements will be denoted by the same reference signs, without redundant description.

A time-of-flight mass spectrometer according to the present invention is provided, as shown in Fig. 1, with a vacuum vessel 110 the interior of which is depressurized to a predetermined degree of vacuum, an ion extraction system including a laser source, a ring-shaped electrode 130 as ion accelerator, a detector 100, and an analysis unit, An MCP detector according to the present invention is suitably applicable to the detector 100 and the triode structure is adopted for it. In the description hereinafter, each of embodiments of the MCP unit having the triode structure and the MCP detector including the same will be detailed as a detector applicable to the time-of-flight mass spectrometer according to the present invention.

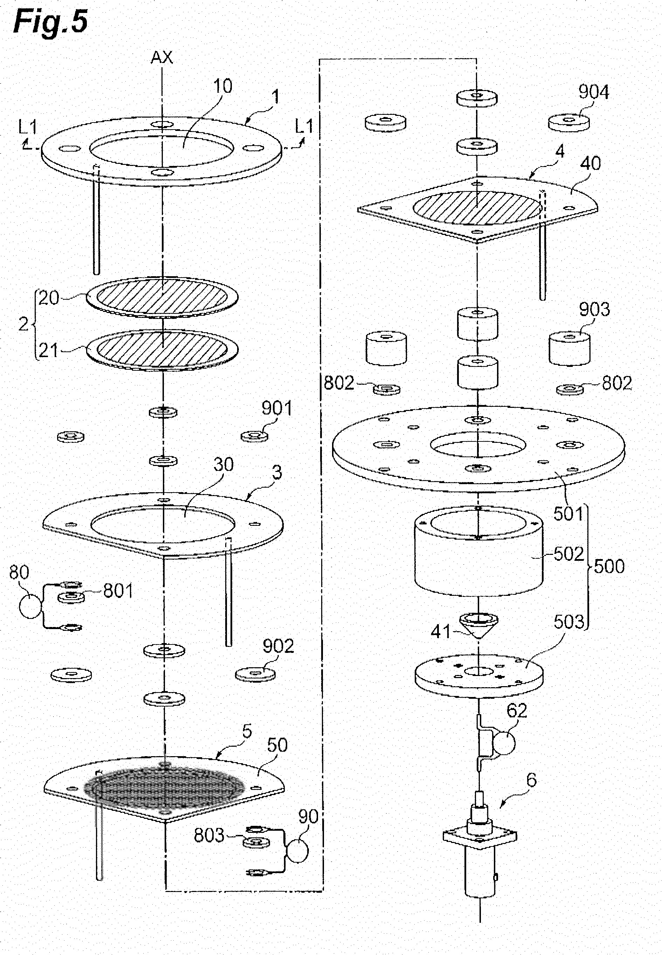

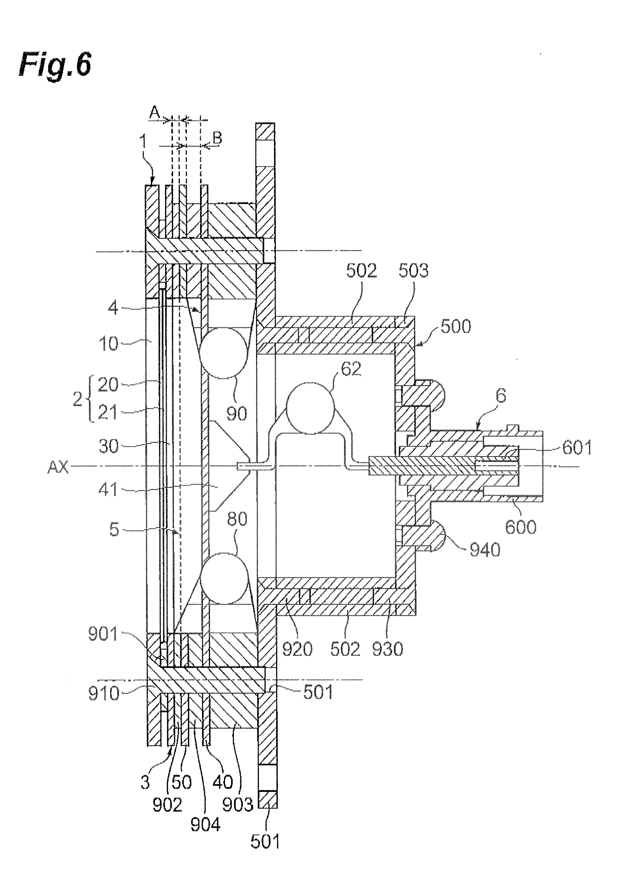

First, an MCP unit and an MCP detector having the triode structure will be described as basic structure of the MCP unit and others according to the present invention, using Figs. 5 to 7 and 8A to 10B. Fig. 5 is an assembly process diagram for explaining the basic structure of the MCP detector to which the MCP unit having the triode structure is applied, which is the same as the basic structure of the MCP unit of the triode structure disclosed in the aforementioned Patent Literature 1. Fig. 6 is a drawing showing a cross-sectional structure along the line L1-L1, of the MCP detector shown in Fig. 5. An equivalent circuit diagram of the MCP detector shown in Figs. 5 and 6 is the same as that shown in Fig. 2.

The MCP detector shown in Fig. 5 is provided with a vacuum vessel the interior of which is maintained at a predetermined degree of vacuum (a metal housing set at the ground potential) and has the structure in which the IN electrode 1 (first electrode), MCP group 2, OUT electrode 3 (second electrode), acceleration electrode 5, and anode 4 are arranged in order along a tube axis AX of the vacuum vessel (coincident with the central axis of the MCP unit). The MCP group 2 is composed of two disk-shaped MCPs 20, 21. The IN electrode 1 (first electrode) is arranged on the entrance face (front face where charged particles arrive) side of the MCP group 2, while the OUT electrode 3 (second electrode) is arranged on the exit face (rear face) side. In this manner, an MCP assembly is constituted by the MCP group 2, and the IN electrode 1 and OUT electrode 3 between which the MCP group 2 is interposed, In the MCP detector shown in Figs. 5 and 6, a four-terminal voltage applying structure with respective voltage-applying leads to the IN electrode 1 (first electrode), OUT electrode 3 (second electrode) 3, acceleration electrode 5 (including an acceleration electrode substrate 50), and anode 4 (including an anode substrate 40) is adopted as a voltage-applying structure to each electrode.

The IN electrode 1 is an electrode of metal (e.g., stainless steel) having a doughnut shape with an opening 10 in its center, and holes for four countersunk screws 91.0 to be inserted therein are provided at intervals of 90° around the center of the tube axis AX in the surface thereof. An IN lead of an electroconductive material (e.g., stainless steel), which has a rod shape extending from the back, is electrically connected to the rear face of the IN electrode 1. A connection point between the IN electrode 1 and the IN lead is located halfway between two adjacent holes. The IN lead is held in a state in which it is inserted in an insulator of an insulating material for IN lead and the IN lead is insulated from the other structural elements (components) by this structure. The insulator for IN lead suitably applicable herein is, for example, PEEK (PolyEtherEtherKetone) resin with excellent processability, heat resistance, impact resistance, and electric insulation.

The OUT electrode 3 is also an electrode of metal having a doughnut shape with an opening in its center as the IN electrode 1 is, and has a structure a part of which is cut off so as not to interfere with the IN-lead insulator housing the IN lead. Holes similar to the holes of the IN electrode 1 are provided at positions corresponding thereto in the surface of the OUT electrode 3, An OUT lead of an electroconductive material (e.g., stainless steel), which has a rod shape extending from the back, is electrically connected to the rear face of the OUT electrode 3. The OUT lead is arranged at a position rotated 90° counterclockwise around the center of the tube axis AX from the IN lead when viewed from the front. This OUT lead, just as the IN lead is, is also held in a state in which it is inserted in an insulator of an insulating material for OUT lead, e.g., the PEEK resin (so as to be insulated from the other structural elements).

Between the IN electrode 1 and the OUT electrode 3 there are MCP insulators 901 of an insulating material with a doughnut shape arranged at positions corresponding to the respective holes of these IN electrode 1 and OUT electrode 3. These MCP insulators 901 are made, for example, of the PEEK resin and the thickness thereof is slightly smaller than that of the MCP group 2. As described above, the MCP assembly wherein the MCP group 2 is interposed between the IN electrode 1 and the OUT electrode 3 is obtained by accurately assembling them so that the centers of the disk-shaped MCPs 20, 21 agree with the centers of the respective openings 10, 30 of the IN electrode 1 and the OUT electrode 3.

Behind the OUT electrode 3, an acceleration electrode substrate 50 is arranged with a predetermined space therefrom, This acceleration electrode substrate 50 is an electrode of metal with a circular opening in its center and is provided with a metal mesh so as to cover this opening. These acceleration electrode substrate 50 and metal mesh constitute the acceleration electrode 5. The acceleration electrode substrate 50 has such a cut structure as not to interfere with the IN-lead insulator housing the IN lead and the OUT-lead insulator housing the OUT lead. Since the acceleration electrode substrate 50 is arranged with the predetermined space from the OUT electrode 3 as described above, the acceleration electrode substrate 50 is provided with holes at positions corresponding to the holes of the OUT electrode 3 and, thin plates 801 of an electroconductive material and insulators 902 of an insulating material both having a doughnut shape are arranged between the acceleration electrode substrate 50 and the OUT electrode 3. The thin plates 801 are metal components for interposing one ends of capacitors 80 between the thin plates 801 and the OUT electrode 3. A material with excellent ductility is suitable for the thin plates 801, and the thin plates 801 are preferably, for example, members obtained by plating phosphor-bronze plates with gold or copper. An example of a material for the insulators 902 applicable herein is the PEEK resin. The opening formed in the acceleration electrode substrate 50 defines an effective area of the acceleration electrode 5 (a mesh region for secondary electrons emitted from the MCP group 2 to pass therethrough), which is wider than an effective area of the MCP group 2 (region to emit the secondary electrons).

Furthermore, behind the acceleration electrode substrate 50 there is an anode substrate 40 arranged with a predetermined space therefrom. This anode substrate 40 has a disk shape as molded of glass epoxy resin (insulating material), and predetermined patterns of metal thin films of copper or the like are formed on a front face and a back face thereof. The metal thin-film pattern on the front face and the metal thin-film pattern on the back face are made electrically conductive to each other. The anode substrate 40 has such a cut structure as not to interfere with the IN-lead insulator housing the IN lead and the OUT-lead insulator housing the OUT lead. Since the anode substrate 40 is arranged with the predetermined space from the acceleration electrode substrate 50 as described above, the anode substrate 40 is provided with holes at positions corresponding to the holes of the acceleration electrode substrate 50 and, thin plates 803 of an electroconductive material and insulators 904 of an insulating material both having a doughnut shape are arranged between the anode substrate 40 and the acceleration electrode substrate 50. The thin plates 803 are metal components for interposing one ends of capacitors 90 between the thin plates 803 and the acceleration electrode substrate 50. A material with excellent ductility is suitable for the thin plates 803, and the thin plates 803 are preferably, for example, members obtained by plating phosphor-bronze plates with gold or copper. An example of a material for the insulators 904 applicable herein is the PEEK resin.

Of the metal thin-film patterns formed respectively on the front face and the back face of the anode substrate 40, the metal thin-firm pattern on the front face is of a circular shape matching the shape of the opening 30 of the OUT electrode 3 and, the opening 30 and the metal thin-film pattern on the front face are coaxially arranged. On the other hand, the metal thin-film pattern on the back face is a substantially linear pattern extending along one of radial directions from the center of the anode substrate 40 and an anode lead of an electroconductive material (e.g., stainless steel) having a rod shape extending from the back is electrically connected to an outside end of the linear pattern. The anode lead is arranged at a position rotated 90° counterclockwise around the center of the tube axis AX from the OUT lead when viewed from the front. Namely, the anode lead is arranged in symmetry with the IN lead with respect to the center of the tube axis AX. This anode lead, just as the IN lead and OUT lead are, is also held in a state in which it is inserted in an insulator of an insulating material for anode lead, e.g., the PEEK resin, thereby to be electrically insulated from the other structural elements.

An anode terminal 41 of copper is screwed to a center of the metal thin-film pattern on the back face. This anode terminal 41 and the anode substrate 40 constitute the anode 4. The anode 4 does not have to be limited to the above structure but may be composed, for example, of the anode substrate 40 of an insulating material, and a metal plate fixed to a partial region or an entire surface on the anode substrate 40. The whole anode 4 may be composed of a metal plate.

Behind the anode 4, there is a rear cover 500 arranged. This rear cover 500 is composed of a substrate 501 of a doughnut shape, a cylindrical part 502, and a substrate 503 also having a doughnut shape. The cylindrical part 502 is interposed between the substrates 501, 503 and fixed thereto with screws 920, 930, and since the inner periphery of the substrate 501 and the outer periphery of the substrate 503 are connected through the cylindrical part 502, the rear cover 500 makes a member of a deep-dish shape. The substrates 501, 503 and the cylindrical part 502 all are made of metal (e.g., stainless steel). The substrate 501 is provided with threaded holes and the rear cover 500 is arranged on the back face of the anode 4 with insulators 903 and thin plates 802 in between, At this time, electrically insulating screws 910 (e.g., to which the PEEK resin is applicable) are engaged with the threaded holes whereby each of the electrodes 1, 3, 4 and the MCP group 2 are fixed to the rear cover 500. The thin plates 802 are metal components for interposing the other ends of the capacitors 80, 90 between the thin plates 802 and the substrate 501. The thin plates 802 may also be the same material as the thin plates 801, 803. For example, the PEEK resin is applicable to the insulators 903. The substrate 501 has holes in which the insulators for the respective leads are inserted.

The BNC terminal 6 as signal output portion is fixed to the center of the substrate 503 with screws 940. An outside 600 of the BNC terminal 6 is electrically connected to the substrate 501 of the rear cover 500. On the other hand, an inside core wire 601 of the BNC terminal 6 is connected through a capacitor 62 to the anode terminal 41. This capacitor 62 has a function to insulate the output thereby to keep a signal output level at the GND level.

Between the OUT electrode 3 and the substrate 501, there are four capacitors 80 arranged as separated at equal intervals around the center of the tube axis AX, the terminals of each of which are electrically connected to these OUT electrode 3 and substrate 501, respectively, by the aforementioned thin plate 801 and thin plate 802. Since each of the substrate 501, cylindrical part 502, and substrate 503 is made of metal, one ends of the capacitors 80 are electrically connected to the outside 600 of the BNC terminal 6. Similarly, between the acceleration electrode substrate 50 and the substrate 501, there are four capacitors 90 arranged as separated at equal intervals around the center of the tube axis AX, the terminals of each of which are electrically connected to these acceleration electrode substrate 50 and substrate 501, respectively, by the aforementioned thin plate 803 and thin plate 802. Therefore, these capacitors 90 are also attached between the metal substrate 501 and the acceleration electrode substrate 50 and one ends of the capacitors 90 are electrically connected to the outside 600 of the BNC terminal 6.

In the MCP detector of the triode structure as described above, the acceleration electrode 5 is arranged between the MCP group 2 and the anode 4, as shown in Fig. 6, so that the shortest distance B to the anode 4 is longer than the shortest distance A to the exit face of the MCP group 2. Namely, the acceleration electrode 5 is arranged between the MCP group 2 and the anode 4 so as to satisfy the condition of A<B, thereby to enable significant reduction of FWHM of a detection peak, resulting in improvement in the time response characteristic. This is because the adjustment of the arrangement condition of the MCP group 2, acceleration electrode 5, and anode 4 leads to achievement of reduction in FWHM of a peak appearing on a detected time spectrum. Namely, the adjustment of the distance A between the MCP group 2 and the acceleration electrode 5 contributes to control of the rise time of the detection peak, while the adjustment of the distance B between the acceleration electrode 5 and the anode 4 contributes to control of the fall time of the detection peak.

The acceleration electrode 5 can be set at any potential higher than the OUT electrode 3, but when the acceleration electrode 5 is set at the same potential as the anode 4, it becomes feasible to optionally limit an acceleration region of secondary electrons emitted from the MCP group 2 when compared with the conventional MCP detector of the bipolar structure (or it becomes feasible to reduce the rise time of the detection peak more than before, because of suppression of temporal spread of emitted electrons).

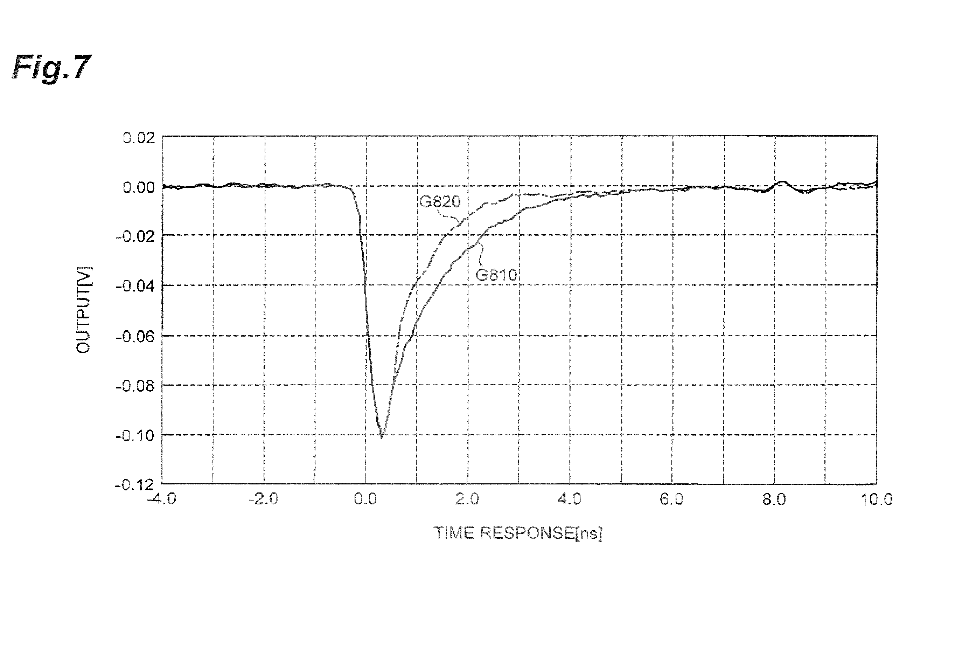

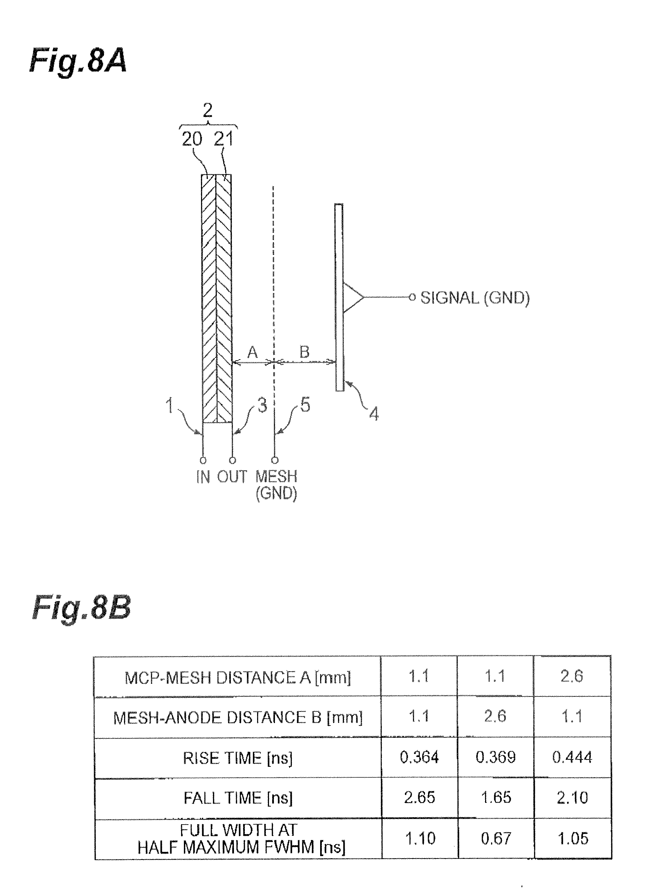

Fig. 7 is a graph showing time response characteristics of the MCP detector to which the MCP unit having the triode structure is applied. Fig. 8A is a cross-sectional view showing the structure of the MCP unit of the triode structure prepared for measuring the response characteristics of Fig. 7, and Fig. 8B a table showing the measurement results.

The prepared measurement system is, as shown in Fig. 8A, the MCP unit composed of the MCP group 2 with the IN electrode 1 on the entrance face side and the OUT electrode 3 on the exit face side, the anode 4, and the acceleration electrode 5 arranged between these MCP group 2 and anode 4, and is assumed to be installed in an ideal environment less affected by an external potential source. In the MCP unit of this measurement system, the anode 4 and acceleration electrode 5 are set at the ground level, the OUT electrode 3 is set at -500 V, and the IN electrode 1 at -2000 V The effective area of the acceleration electrode 5 is composed of a metal mesh (of wire width 40 µm and wire pitch 0.4 mm) with the aperture ratio of 81%.

This measurement was conducted by monitoring a temporal change of output voltage obtained from the anode 4 while changing the shortest distance A between the MCP group 2 and the acceleration electrode 5 and the shortest distance B between the acceleration electrode 5 and the anode 4 shown in Fig. 8A. Namely, as shown in Fig. 8B, the measurement was carried out for case 1 where the distance A was 1.1 mm and the distance B was also 1.1 mm, case 2 where the distance A was 1.1 mm and the distance B was 2.6 mm, and case 3 where the distance A was 2.6 mm and the distance B was 1.1 mm. In Fig. 7, graph G810 shows a time spectrum of case 1 (A=B) and graph G820 a time spectrum of case 2 (A<B). As also seen from Fig. 7, case 2 demonstrates a significant reduction of full width at half maximum (FWHM) of a detection peak due to a large decrease of the fall time of the detection peak. On the other hand, though not shown in Fig. 7, case 3 shows almost the same result of FWHM of the detection peak as case 1, but, instead, demonstrates an increase of the rise time in spite of a reduction of the fall time of the detection peak. In this manner, case 3 shows synchronous variation of the fall time and the rise time, and it is therefore difficult to implement shaping of the waveform of the detection peak.

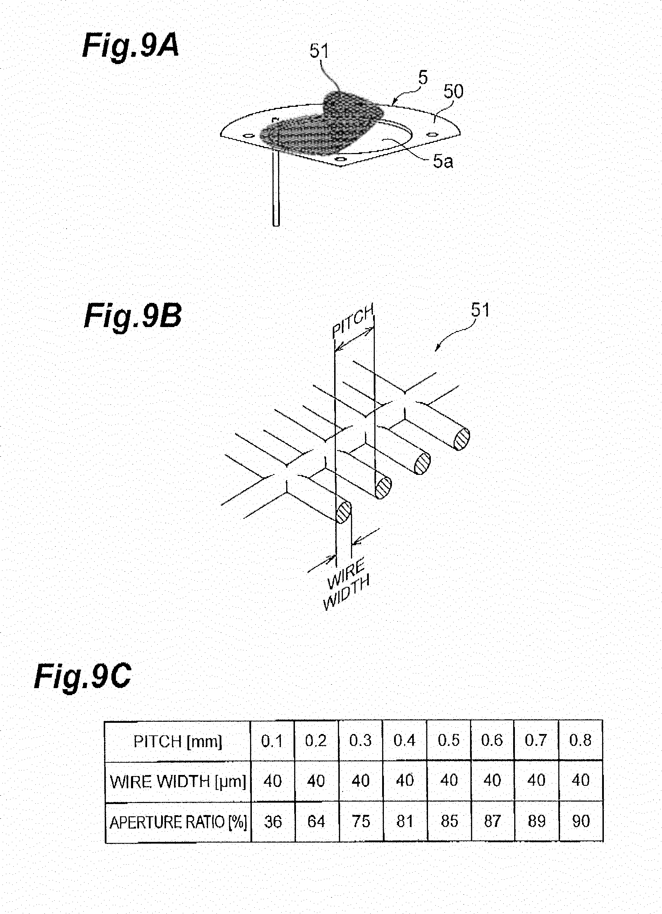

Next, Figs. 9A to 9C are drawings for explaining the structure of the acceleration electrode 5. As shown in Fig. 9A, the acceleration electrode 5 is provided with the acceleration electrode substrate 50 with a circular opening 5a in its center, and a metal mesh 51 attached so as to cover the opening 5a. The metal mesh 51 is obtained by arranging metal wires of a predetermined wire width in a grid pattern, as shown in Fig. 9B. A limit of the wire width is considered to be about 40 µm in view of manufacturing restrictions and mechanical strength. Fig. 9C is a table showing a relation between the wire pitch and the aperture ratio of the metal mesh 51 in the wire width of 40 µm.

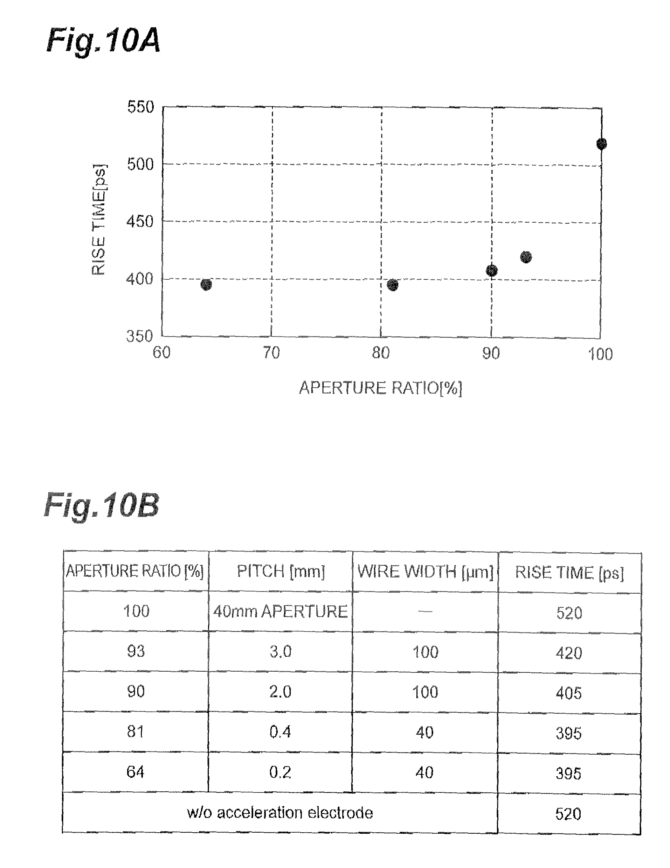

The aperture ratio in the effective area of the acceleration electrode 5 having the above-described structure (the aperture ratio of the metal mesh) is preferably not less than 60% and not more than 95%. Reasons for it are as follows: if the aperture ratio is less than 60%, the number of passing electrons (transmittance of the acceleration electrode) will decrease, so as to reduce a signal level acquired from the anode; on the other hand, if the aperture ratio is more than 95%, it will be substantially infeasible to implement shaping of the waveform of the detection peak in the resultant time spectrum. Figs. 10A and 10B are a graph showing a relation of the aperture ratio (%) of the acceleration electrode applied to the MCP unit shown in Fig. 8A against the rise time (ps), and a table showing the measurement conditions thereof.

The below will describe restriction structures applied to the MCP unit of the triode structure having the above-described structure. Namely, the MCP unit and others according to the present invention have the triode structure as described above, as basic structure and a variety of structures are further applicable as restriction structures for reducing the influence of the external potential source existing near the MCP unit.

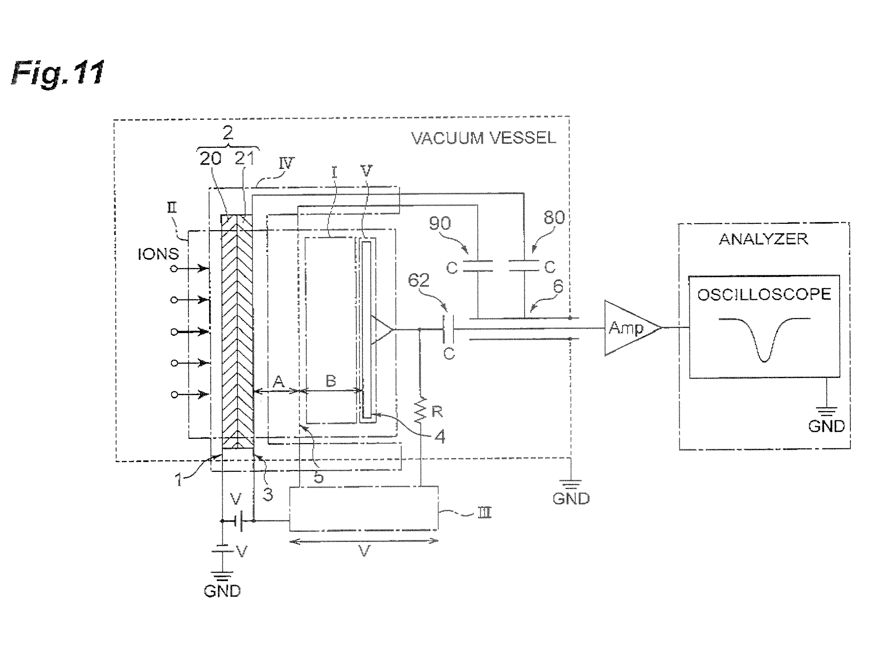

Fig. 11 is an equivalent circuit diagram for explaining characteristic structures of the MCP detector to which the MCP unit according to the present invention is applied, and the major part thereof is overlapped with the equivalent circuit diagram of Fig. 2. The MCP detector of Fig. 11 is also applicable to the TOF-MS device and others. The MCP detector shown in Fig. 11 is housed in a vacuum vessel the interior of which is maintained at a predetermined degree of vacuum. The vacuum vessel is comprised of an electroconductive material and is set at the ground potential. In this MCP detector, two MCPs (MCP group 2) are interposed between the IN electrode 1 and the OUT electrode 3 with the respective openings in their centers. The anode 4 is located behind the OUT electrode 3 and the acceleration electrode 5 having the metal mesh is further located between the OUT electrode 3 and the anode. The vacuum vessel is connected to the shield side of the BNC terminal 6 for signal readout, while the core wire of the BNC terminal 6 is connected through the capacitor 62 to the anode 4. This capacitor 62 has a function to insulate the output so as to keep the signal output level at the GND level. Furthermore, the capacitors 80 and 90 are also arranged between the shield side of the BNC terminal 6 and the OUT electrode 3 and between the shield side of the BNC terminal 6 and the acceleration electrode 5, respectively. The distance B between the acceleration electrode 5 and the anode 4 is set to be larger than the distance A between the MCP group 2 and the acceleration electrode 5.

In the MCP detector having the structure as described above, with respect to the minus potential set for the IN electrode 1, the OUT electrode 3 is set at a minus potential higher than the IN electrode 1. The acceleration electrode 5 and anode 4 may be set at the same potential. In this manner, the MCP detector has the floating anode structure wherein the anode potential is not grounded.

A signal from the anode 4, which is extracted through the core wire of the BNC terminal 6, is amplified by an amplifier (Amp) and then is taken into the analysis unit. Specifically, when in the MCP detector 100a charged particles impinge on the MCP group 2, a large number of electrons are emitted from the MCP group 2 in accordance therewith. The secondary electrons emitted in this manner reach the anode 4 to be converted into an electric signal as a voltage or current change. On this occasion, the detection signal is output at the ground potential to the outside by the capacitor 62 disposed between the anode 4 and the core wire, and generation of the waveform distortion and overshoot (ringing) of the output signal is suppressed by the capacitors 80, 90 disposed between the shield side of the BNC terminal 6 and the OUT electrode 3 and between the shield side of the BNC terminal 6 and the acceleration electrode 5, respectively (in the ideal environment).

Particularly, the MCP unit according to the present invention is further provided with the restriction structure for confining the secondary electrons (reflected electrons) emitted from the anode 4 in response to incidence of the secondary electrons from the MCP group 2, within the space between the acceleration electrode and the anode.

Specific restriction structures can be realized, as shown in Fig. 11, by mode I (first embodiment) of physically separating the space between the acceleration electrode and the anode from the surrounding space around the MCP unit, mode II (second embodiment) of restricting movement along directions perpendicular to the central axis of the MCP unit, of the reflected electrons emitted from the anode, mode III (third embodiment) of controlling a potential difference between the acceleration electrode and the anode, mode IV (fourth embodiment) of controlling trajectories of the secondary electrons traveling from the microchannel plate to the anode, and mode V (fifth embodiment) of changing the structure to suppress emission itself of the reflected electrons from the anode. The foregoing restriction structure can also be realized by a combination of two or more of modes I to V.

### (First Embodiment)

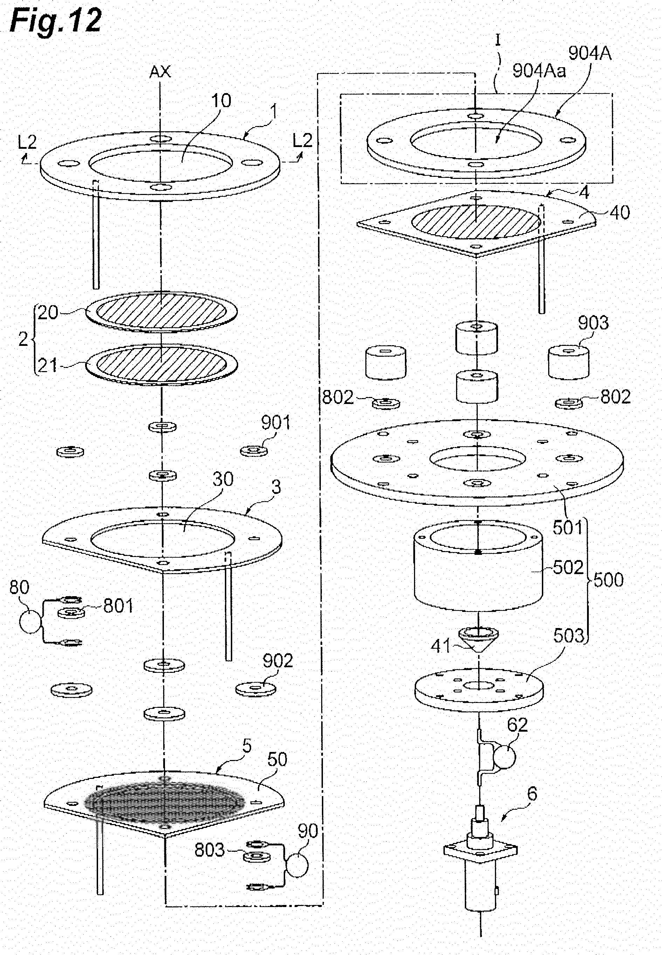

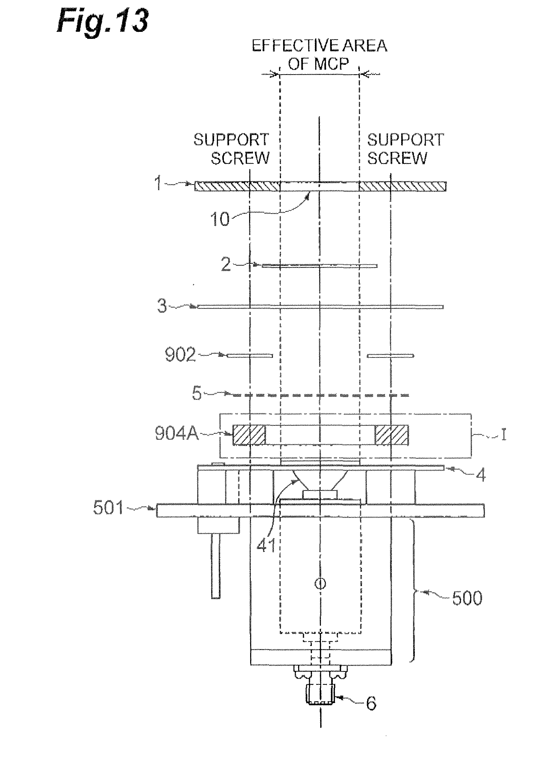

Fig. 12 is an assembly process diagram for explaining the structure of the MCP detector to which the MCP unit of the first embodiment is applied. Fig. 13 is a drawing showing a cross-sectional structure along the line L2-L2, of the MCP detector shown in Fig. 12.

The restriction structure in the first embodiment is realized by the structure (mode I) for separating the space between the acceleration electrode 5 and the anode 4 from the surrounding space, as shown in Fig. 11. Specifically, the restriction structure applied in the first embodiment is a ring member 904A having a through hole 904Aa, instead of the insulators 904 as spacers, in the basic structure of the MCP detector shown in Fig. 5.

Namely, the MCP detector to which this MCP unit of the first embodiment is applied, has the structure in which the IN electrode 1 (first electrode), MCP group 2, OUT electrode 3 (second electrode), acceleration electrode 5, and anode 4 are arranged in order along the tube axis AX (coincident with the central axis of the MCP unit). The MCP insulators 901 of the insulating material are arranged between the IN electrode 1 and the OUT electrode 3. Behind the OUT electrode 3, the acceleration electrode 5 is arranged through the insulators 902. Furthermore, the anode 4 is arranged behind this acceleration electrode 5 and, the ring member 904A having the through hole 904Aa which allows passage of secondary electrons from the MCP group 2, is arranged between these acceleration electrode 5 and anode 4. Behind the anode 4, the rear cover 500 is arranged with the insulators 903 and thin plates 802 in between the anode 4 and the rear cover 500. This rear cover 500 is composed of the substrate 501, cylindrical part 502, and substrate 503. The BNC terminal 6 as a signal output portion is fixed to the center of the substrate 503 and the inside core wire 601 of the BNC terminal 6 is connected through the capacitor 62 to the anode terminal 41.

In the first embodiment, the ring member 904A has the through hole 904Aa defined by a continuous surface surrounding the tube axis AX, so as to allow the secondary electrons traveling from the acceleration electrode 5 to the anode 4 to pass therethrough. The ring member 904A has a first face in contact with the acceleration electrode 5 and a second face in contact with the anode 4, which is opposed to the first face, and the through hole 904Aa of the ring member 904A has a shape extending so as to connect the first face and the second face. The ring member 904A may be comprised of either of a metal member and an insulating material. This structure maintains the space between the acceleration electrode 5 and the anode 4 in an isolated state from the surrounding space. As a result, the probability of reflected electrons jumping out from the space between the acceleration electrode 5 and the anode 4 toward the outside of the MCP detector is effectively reduced (cf. graph G420 in Fig. 4B). However, in the structure in which the whole anode 4 is comprised of a metal plate, the ring member 904A exhibits different functions depending upon constituent materials thereof. Namely, when the acceleration electrode 5 and the anode 4 are set at the same potential, the ring member 904A is preferably comprised of the metal material. On the other hand, when the potential of the acceleration electrode 5 and the potential of the anode 4 are independently controlled, the ring member 904A is preferably comprised of the insulating material.

### (Second Embodiment)

The restriction structure in the second embodiment is realized by the structure (mode II) for limiting movement along directions perpendicular to the tube axis AX of the MCP detector, of the reflected electrons emitted from the anode 4, as shown in Fig. 11. The structure of the MCP detector to which the MCP unit of the second embodiment is applied is substantially the same as the basic structure shown in Fig. 5, except for the structure corresponding to the restriction structure in the second embodiment.

Namely, the MCP detector to which the MCP unit of the second embodiment is applied has the structure in which the IN electrode 1 (first electrode), MCP group 2, OUT electrode 3 (second electrode), acceleration electrode 5, and anode 4 are arranged in order along the tube axis AX (coincident with the central axis of the MCP unit). The MCP insulators 901 of the insulating material are arranged between the IN electrode 1 and the OUT electrode 3. Behind the OUT electrode 3, the acceleration electrode 5 is arranged through the insulators 902. Furthermore, the anode 4 is arranged behind this acceleration electrode 5 and the insulators 904 as spacers are arranged between these acceleration electrode 5 and anode 4. Behind the anode 4, the rear cover 500 is arranged with the insulators 903 and the thin plates 802 in between the anode 4 and the rear cover 500. This rear cover 500 is composed of the substrate 501, cylindrical part 502, and substrate 503. The BNC terminal 6 as a signal output portion is fixed to the center of the substrate 503 and the inside core wire 601 of the BNC terminal 6 is connected through the capacitor 62 to the anode terminal 41.

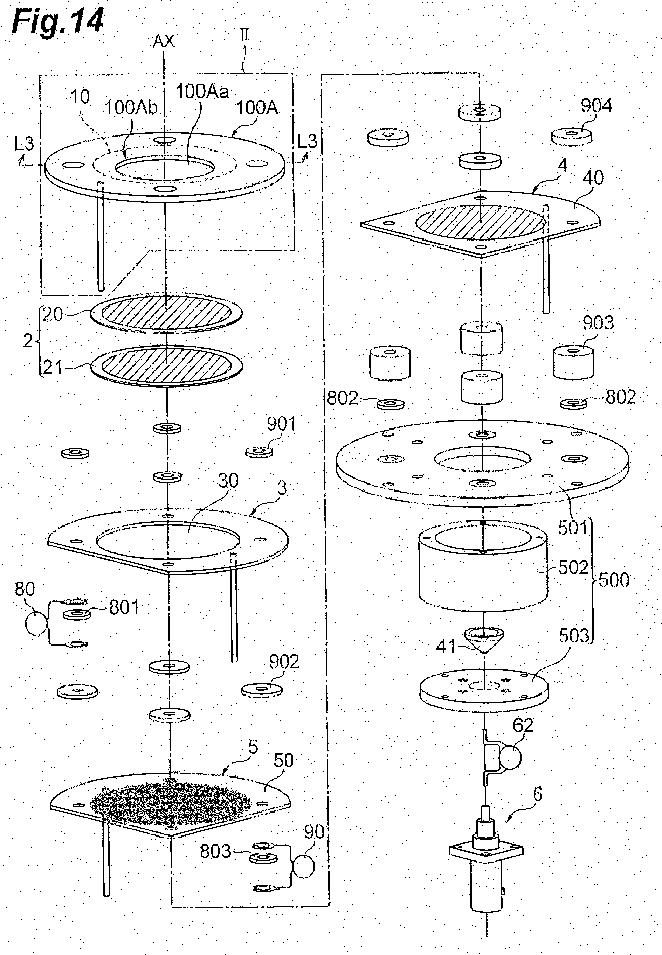

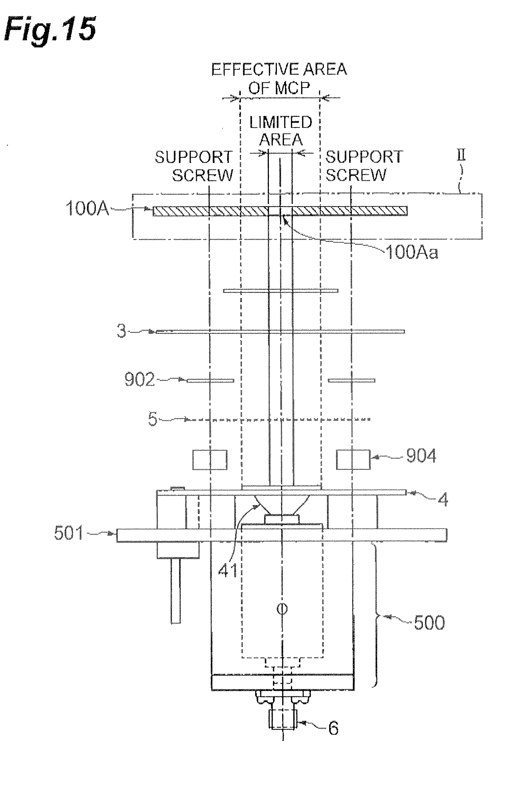

The restriction structure of the second embodiment can be realized by any of various structures, and Fig. 14 is an assembly process diagram for explaining the first structure of the MCP detector to which the MCP unit of the second embodiment is applied. Fig. 15 is a drawing showing a cross-sectional structure along the line L3-L3, of the MCP detector shown in Fig. 14.

Specifically, in the first structure realizing the restriction structure of the second embodiment, an IN electrode 100A is applied instead of the IN electrode 1, in the basic structure of the MCP detector shown in Fig. 5. In this first structure, the IN electrode 100A is provided with a mask member 100Ab such that the diameter of an opening 100Aa thereof is smaller than the diameter of the opening 10 of the IN electrode 1 shown in Fig. 5 (basic structure). The mask member 100Ab, as shown in Fig. 14, has a through hole defined by a continuous surface surrounding the tube axis AX, and constitutes a part of the IN electrode 100A. This structure limits the arriving area of secondary electrons emitted from the MCP group 2 to nearer the tube axis AX, on the anode 4. For this reason, it becomes feasible to relatively increase the distance between generation positions of the reflected electrons emitted from the anode 4 and the edge of the anode 4, which effectively reduces the probability of reflected electrons jumping out from the space between the acceleration electrode 5 and the anode 4 toward the outside of the MCP detector.

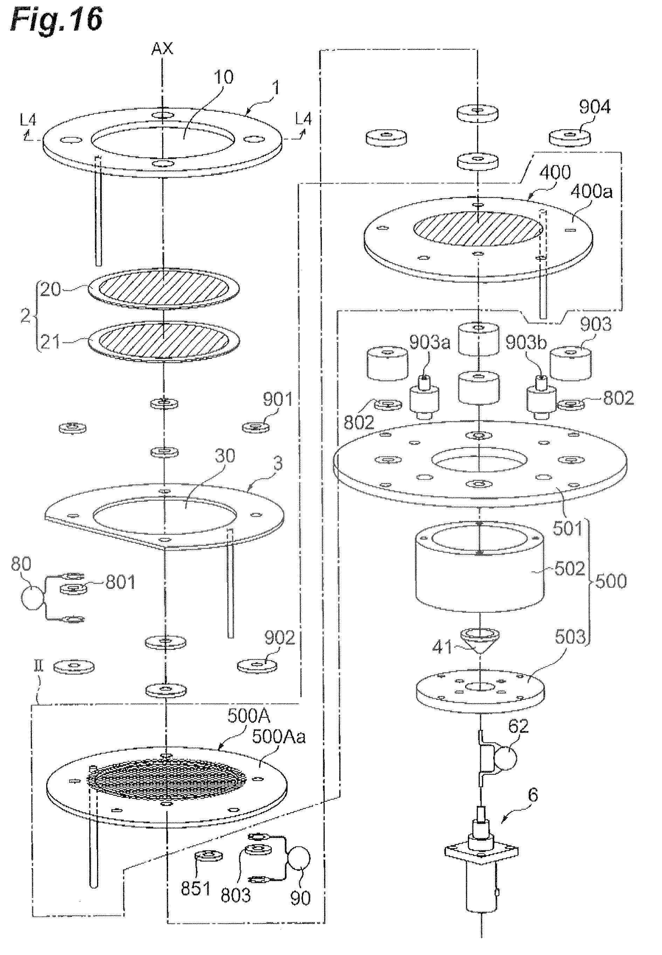

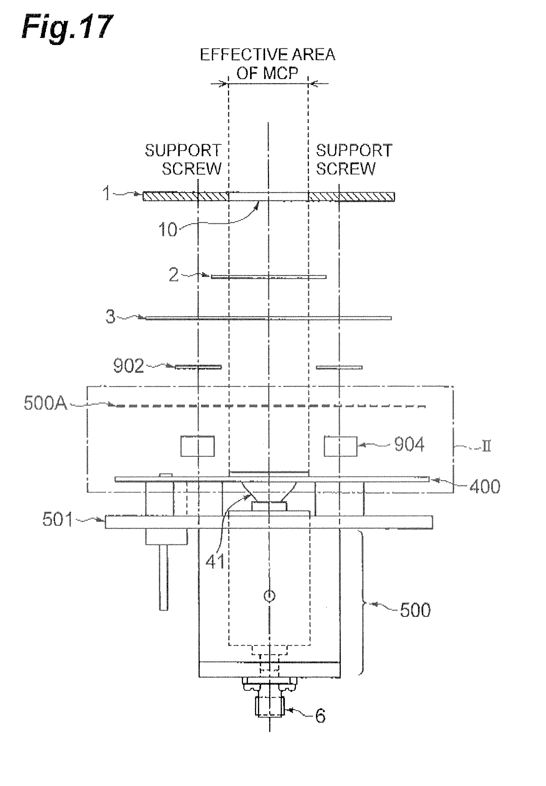

Next, in the second structure realizing the restriction structure in the second embodiment, an acceleration electrode 500A and an anode 400 are applied instead of the acceleration electrode 5 and the anode 4, in the basic structure of the MCP detector shown in Fig. 5. Fig. 16 is an assembly process diagram for explaining the second structure of the MCP detector to which the MCP unit of the second embodiment is applied. Fig. 17 is a drawing showing a cross-sectional structure along the line L4-L4, of the MCP detector shown in Fig. 16. The structure of the MCP detector having the second structure as the restriction structure (Figs. 16 and 17) is substantially the same as the basic structure shown in Fig. 5, except for the acceleration electrode 500A and the anode 400.

Namely, in this second structure, the acceleration electrode 500A is composed of an acceleration electrode substrate 500Aa having an opening in its center, and a metal mesh covering this opening. Particularly, the shape of the acceleration electrode 500Aa is circular and its maximum diameter is larger than that of the acceleration electrode substrate 50 shown in Fig. 5. Similarly, in the anode 400, the shape of an anode substrate 400a is also circular and its maximum diameter is larger than that of the anode substrate 40 shown in Fig. 5. Specifically, the anode 400 (anode substrate 400a) has the maximum diameter larger than a theoretical maximum diameter of the anode calculated under the ideal environment where the electric field distribution around the MCP unit is less affected by the external potential source (e.g., the environment of Fig. 8A), the theoretical maximum diameter allowing absorption of reflected electrons emitted once. Likewise, the acceleration electrode 500A also has the maximum diameter approximately equal to that of the anode 400. This second structure can also substantially increase travel distances (in the directions perpendicular to the tube axis AX) of reflected electrons emitted from the anode 400. As a result, the probability of reflected electrons jumping out from the space between the acceleration electrode 5 and the anode 4 toward the outside of the MCP detector is effectively reduced.

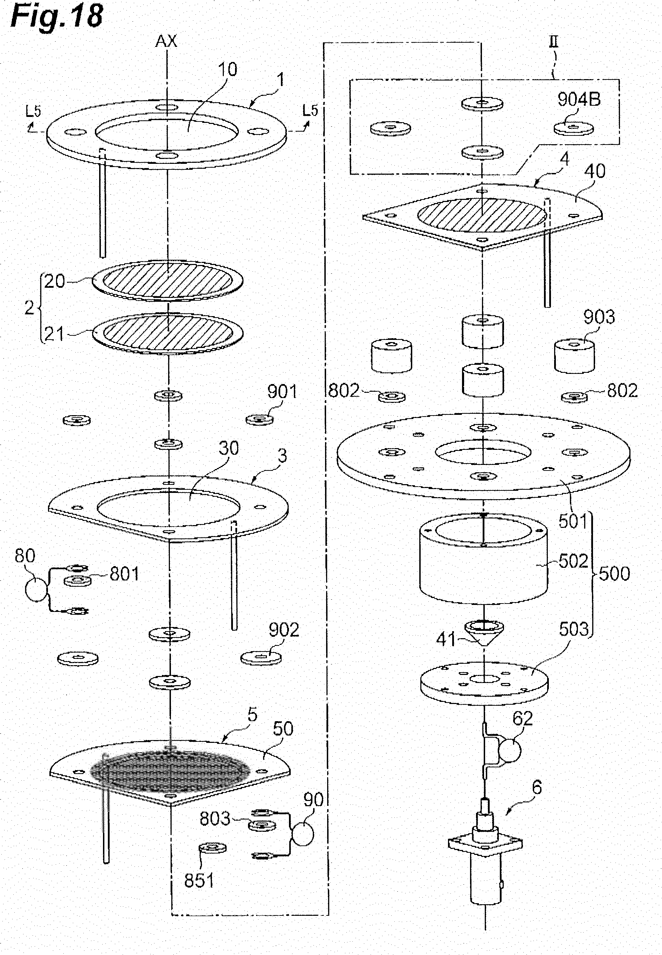

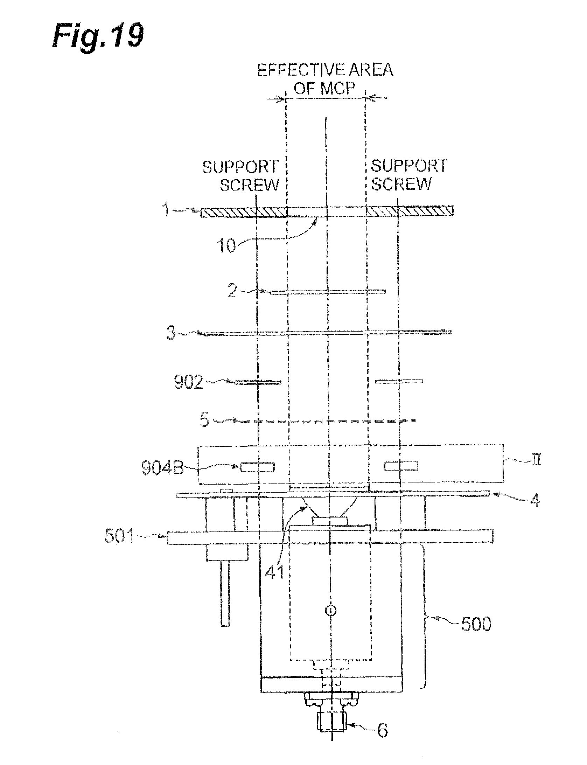

Next, in the third structure realizing the restriction structure in the second embodiment, insulators 904B are applied instead of the insulators 904 arranged between the acceleration electrode 5 and the anode 4, in the basic structure of the MCP detector shown in Fig. 5. Fig. 18 is an assembly process diagram for explaining the third structure of the MCP detector to which the MCP unit of the second embodiment is applied. Fig. 19 is a drawing showing a cross-sectional structure along the line L5-L5, of the MCP detector shown in Fig. 18. The structure of the MCP detector having the third structure as the restriction structure (Figs. 18 and 19) is substantially the same as the basic structure of the MCP detector shown in Fig. 5, except for the insulators 904B.

Namely, in this third structure, the insulators 904B contribute to setting of the distance B along the tube axis AX from the acceleration electrode 5 to the anode 4. Specifically, in the state in which the distance A along the tube axis AX from the OUT electrode 3 to the acceleration electrode 5 is set smaller than the distance B along the tube axis AX from the acceleration electrode 5 to the anode 4, the distance B between the acceleration electrode 5 and the anode 4 is defined so that the distance B is not more than twice the distance A. This third structure can decrease the solid angle of movement of reflected electrons emitted from the anode 4 by making the distance between the acceleration electrode 5 and the anode 4 smaller than the normal distance. As a result, the probability of reflected electrons jumping out from the space between the acceleration electrode 5 and the anode 4 toward the outside of the MCP detector is effectively reduced.

Furthermore, the fourth structure realizing the restriction structure in the second embodiment has the same structure of the MCP detector itself as the basic structure shown in Fig. 5, but the distance from the MCP detector to the housing set at the ground potential is made sufficiently long. This fourth structure can weaken the potential gradient from the MCP unit to the housing. As a result, the probability of reflected electrons jumping out from the space between the acceleration electrode 5 and the anode 4 toward the outside of the MCP detector is effectively reduced.

### (Third Embodiment)

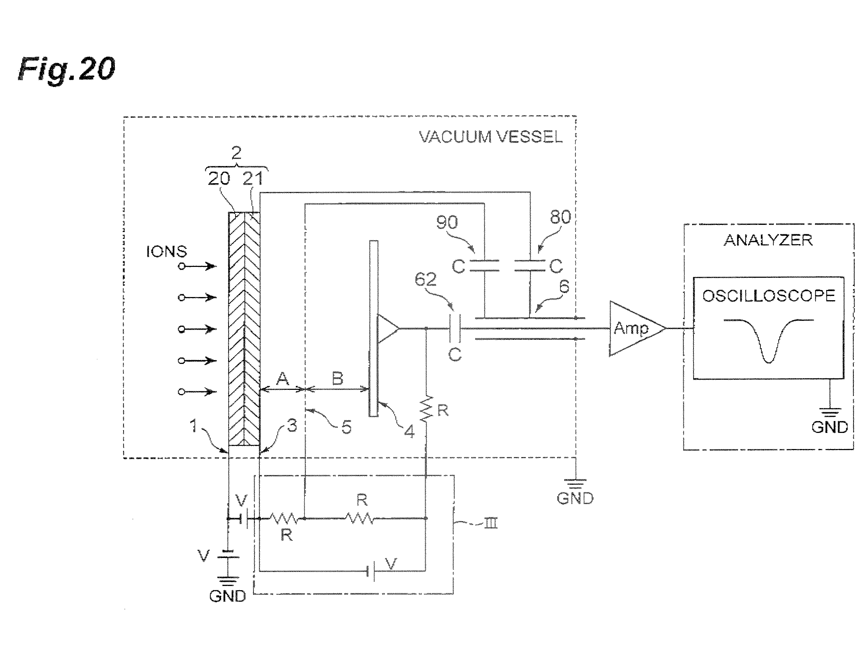

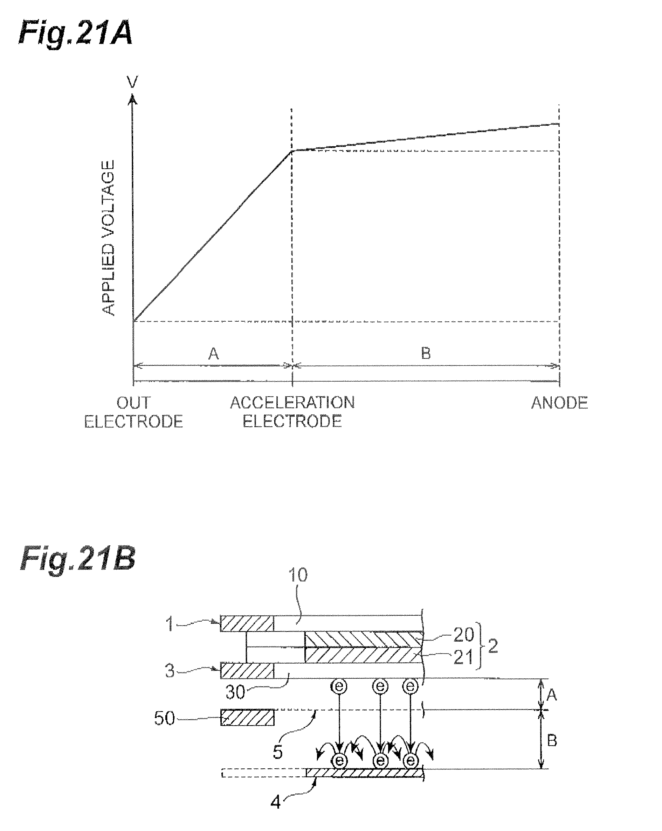

The restriction structure in the third embodiment is realized by the structure (mode III) for controlling the potential difference between the acceleration electrode 5 and the anode 4, as shown in Fig. 11. The basic structure of the MCP detector to which the MCP unit of the third embodiment is applied is substantially the same as the basic structure shown in Figs. 2 and 11, except for the structure corresponding to the restriction structure in the third embodiment. Fig. 20 is an equivalent circuit diagram for explaining the structure of the MCP detector to which the MCP unit according to the third embodiment is applied. Figs. 21A and 21B are drawings showing a voltage applied state between the OUT electrode 3 and the anode 4, in the MCP detector to which the MCP unit according to the third embodiment is applied, and a cross-sectional structure thereof.

Namely, the MCP detector (Fig. 20) to which the MCP unit of this third embodiment is applied is housed in a vacuum vessel the interior of which is maintained at a predetermined degree of vacuum, as in Figs. 2 and 11. The vacuum vessel is comprised of an electroconductive material and is set at the ground potential. In this MCP detector, two MCPs (MCP group 2) are interposed between the IN electrode 1 and the OUT electrode 3 with the respective openings in their centers. The anode 4 is located behind the OUT electrode 3 and the acceleration electrode 5 having the metal mesh is further located between the OUT electrode 3 and the anode. The vacuum vessel is connected to the shield side of the BNC terminal 6 for signal readout, while the core wire of the BNC terminal 6 is connected through the capacitor 62 to the anode 4.

The restriction structure in this third embodiment is realized, as shown in Fig. 20, by a structure for setting the anode 4 at a potential higher than the acceleration electrode 5. In this case, as shown in Fig. 21A, the anode 4 is set at the predetermined potential such that a potential gradient in the space between the acceleration electrode 5 and the anode 4 is smaller than a potential gradient in the space between the OUT electrode 3 and the acceleration electrode 5. By this restriction structure in the third embodiment, the trajectories of reflected electrons emitted from the anode 4 are bent toward the anode 4 by the potential gradient set in the space between the acceleration electrode 5 and the anode 4. As a result, the probability of reflected electrons jumping out from the space between the acceleration electrode 5 and the anode 4 toward the outside of the MCP detector is effectively reduced.

### (Fourth Embodiment)

The restriction structure in the fourth embodiment is realized by the structure (mode IV) for controlling trajectories of the secondary electrons traveling from the microchannel plate to the anode, as shown in Fig. 11. The structure of the MCP detector to which the MCP unit of the fourth embodiment is applied is substantially the same as the basic structure shown in Fig. 5, except for the structure corresponding to the restriction structure in the fourth embodiment.

Namely, the MCP detector to which the MCP unit of the fourth embodiment is applied has the structure in which the IN electrode 1 (first electrode), MCP group 2, OUT electrode 3 (second electrode), acceleration electrode 5, and anode 4 are arranged in order along the tube axis AX (coincident with the central axis of the MCP unit). The MCP insulators 901 of the insulating material are arranged between the IN electrode 1 and the OUT electrode 3. Behind the OUT electrode 3, the acceleration electrode 5 is arranged through the insulators 902. Furthermore, the anode 4 is arranged behind this acceleration electrode 5 and the insulators 904 as spacers are arranged between these acceleration electrode 5 and anode 4. Behind the anode 4, the rear cover 500 is arranged with the insulators 903 and the thin plates 802 in between the anode 4 and the rear cover 500. This rear cover 500 is composed of the substrate 501, cylindrical part 502, and substrate 503. The BNC terminal 6 as a signal output portion is fixed to the center of the substrate 503 and the inside core wire 601 of the BNC terminal 6 is connected through the capacitor 62 to the anode terminal 41.

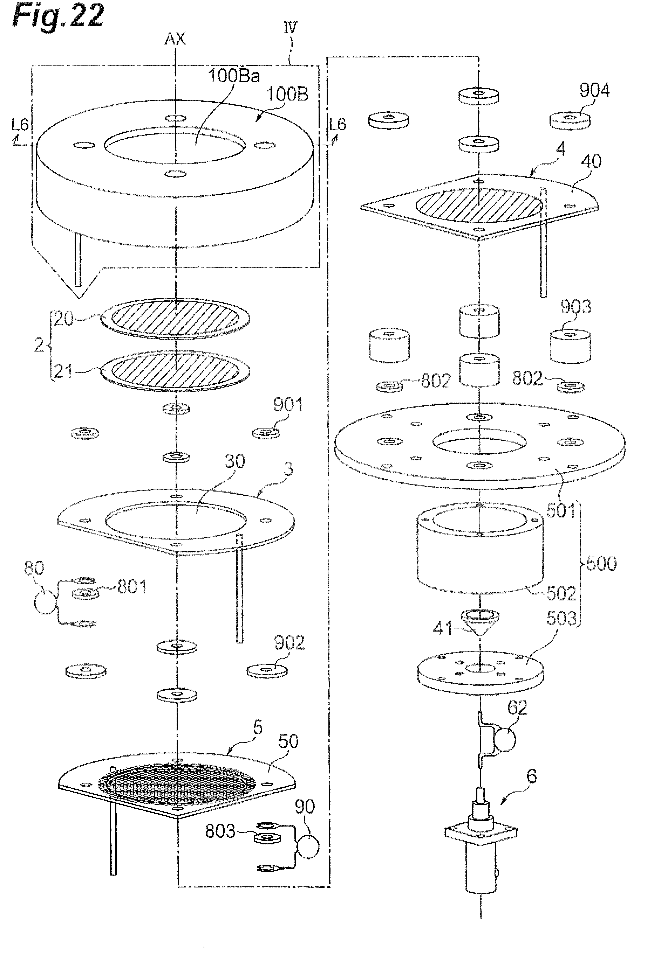

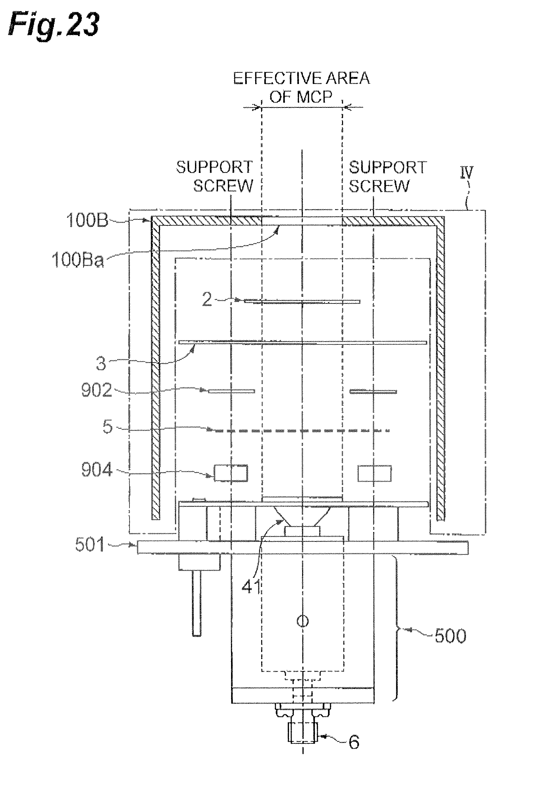

The restriction structure of the fourth embodiment can be realized by any of various structures, and Fig. 22 is an assembly process diagram for explaining the first structure of the MCP detector to which the MCP unit of the fourth embodiment is applied. Fig. 23 is a drawing showing a cross-sectional structure along the line L6-L6, of the MCP detector shown in Fig. 22.

Specifically, in the first structure realizing the restriction structure of the fourth embodiment, an IN electrode 100B is applied instead of the IN electrode 1, in the basic structure of the MCP detector shown in Fig. 5. In this first structure, the IN electrode 100B has a shape realizing an electron lens structure for controlling trajectories of the secondary electrons traveling from the MCP group 2 to the anode 4. Namely, the IN electrode 100B is composed of a flat portion having an opening 100Ba (portion facing the entrance face of the MCP group 2), and a side wall portion extending from the edge of the flat portion toward the anode 4. This first structure bends the trajectories of reflected electrons toward the anode 4 even if the reflected electrons emitted from the anode 4 move along the directions perpendicular to the tube axis AX. As a result, the probability of reflected electrons jumping out from the space between the acceleration electrode 5 and the anode 4 toward the outside of the MCP detector is effectively reduced.

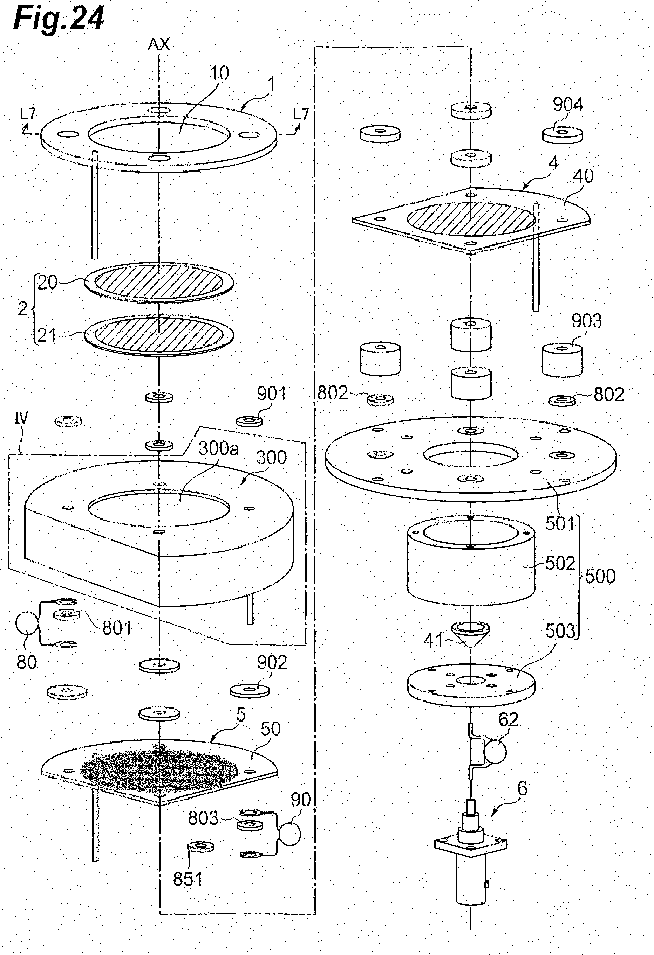

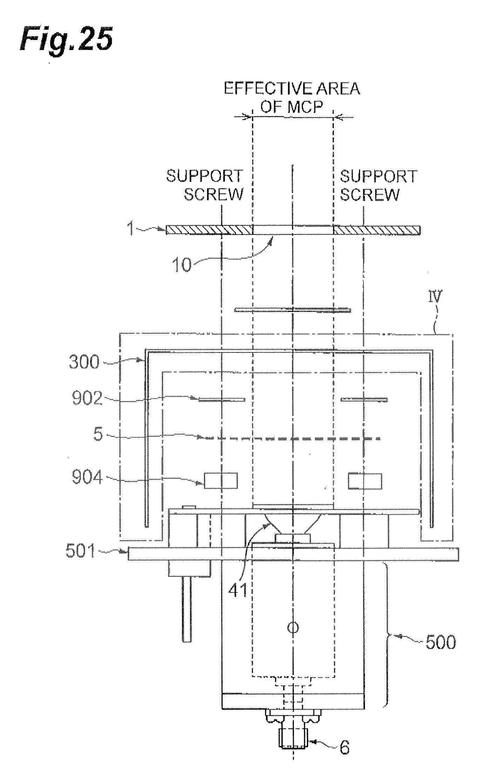

Next, in the second structure realizing the restriction structure in the fourth embodiment, an OUT electrode 300 is applied instead of the OUT electrode 3, in the basic structure of the MCP detector shown in Fig. 5. Fig. 24 is an assembly process diagram for explaining the second structure of the MCP detector to which the MCP unit of the fourth embodiment is applied. Fig. 25 is a drawing showing a cross-sectional structure along the line L7-L7, of the MCP detector shown in Fig. 24.

In the second structure of the fourth embodiment, the OUT electrode 300 has a shape realizing an electron lens structure for controlling the trajectories of the secondary electrons traveling from the MCP group 2 to the anode 4. Namely, the OUT electrode 300 is composed of a flat portion having an opening 300a (portion facing the exit face of the MCP group 2), and a side wall portion extending from the edge of the flat portion toward the anode 4. This second structure bends the trajectories of reflected electrons toward the anode 4 even if the reflected electrons emitted from the anode 4 move along the directions perpendicular to the tube axis AX. As a result, the probability of reflected electrons jumping out from the space between the acceleration electrode 5 and the anode 4 toward the outside of the MCP detector is effectively reduced.

### (Fifth Embodiment)

A structure of the MCP detector to which the MCP unit of the fifth embodiment is the same as the basic structure of the triode structure shown in Figs. 5 and 6. However, this fifth embodiment has a structure for suppressing emission itself of reflected electrons from the anode 4. Specifically, the anode 4 has a structure in which a surface thereof is coated with carbon or the like to suppress generation of secondary electrons (reflected electrons). In this manner, we can expect the sufficient effect of reducing the influence of the external potential source by the change of the structure of the anode 4 itself.

The present invention provides the MCP unit of the triode structure realizing the excellent time response characteristic, with the restriction structure for confining the reflected electrons (secondary electrons) emitted from the anode in response to incidence of the secondary electrons from the MCP, within the space between the acceleration electrode and the anode, thereby obtaining the stable time response characteristic without being affected by the external environment such as the external potential source.

From the above description of the present invention, it will be obvious that the invention may be varied in many ways. Such variations are not to be regarded as a departure from the spirit and scope of the invention, and all improvements as would be obvious to those skilled in the art are intended for inclusion within the scope of the following claims.

## Claims

1. An MCP unit comprising:
a microchannel plate arranged on a plane intersecting with a central axis of the MCP unit and configured to emit secondary electrons internally multiplied in response to incidence of a charged particle traveling along the central axis, the microchannel plate having an entrance face which the charged particle enters, and an exit face which is opposed to the entrance face and which the secondary electrons exit;
a first electrode in contact with the entrance face of the microchannel plate, the first electrode being set at a first potential;
a second electrode in contact with the exit face of the microchannel plate, the second electrode being set at a second potential higher than the first potential;
an anode arranged as intersecting with the central axis, at a position where the secondary electrons emitted from the exit face of the microchannel plate arrive, the anode being set at a third potential higher than the second potential;
an acceleration electrode arranged between the microchannel plate and the anode, the acceleration electrode being set at a fourth potential higher than the second potential and having a plurality of openings for allowing the secondary electrons traveling from the exit face of the microchannel plate to the anode to pass therethrough; and
an electron lens structure for controlling trajectories of the secondary electrons traveling from the microchannel plate to the anode, so that reflected electrons emitted from the anode in response to incidence of the secondary electrons from the microchannel plate are confined within a space between the acceleration electrode and the anode.

2. The MCP unit according to claim 1, wherein the electron lens structure includes the first electrode having a side wall portion extending from an edge of a flat portion facing the entrance face of the microchannel plate toward the anode.

3. The MCP unit according to claim 1, wherein the electron lens structure includes the second electrode having a side wall portion extending from an edge of a flat portion facing the exit face of the microchannel plate toward the anode.

4. An MCP detector comprising:
the MCP unit as set forth in any one of claims 1 to 3; and
a signal output portion arranged so as to interpose the anode between the signal output portion and the microchannel plate, the signal output portion having a signal line electrically connected to the anode.

5. The MCP detector according to claim 4, wherein the signal output portion includes a coaxial cable comprising the signal line and a shield portion surrounding the signal line,
the MCP detector further comprising a capacitor having one terminal electrically connected to the shield portion, and the other terminal electrically connected to the acceleration electrode.

6. A time-of-flight mass spectrometer comprising:
a vacuum vessel inside which a sample to be analyzed as an ion source is installed;
an ion extraction system for making the sample in the vacuum vessel emit an ion;
an ion accelerator for accelerating the ion emitted from the sample, which is arranged in the vacuum vessel;
the MCP detector as set forth in claim 4 or 5, which is arranged so as to interpose the ion accelerator between the MCP detector and the sample; and
an analysis unit for determining at least a mass, as information about the ion emitted from the sample, the analysis unit detecting a time of flight from the ion accelerator to the MCP detector, based on a detection signal from the MCP detector, thereby to determine the mass of the ion reaching the MCP detector.
